# EUROPEAN PATENT SPECIFICATION

(11) **EP 2 828 530 B1**
(45) Date of publication and mention of the grant of the patent: **01.09.2021**
(21) Application number: 13713567.9
(22) Date of filing: 15.03.2013
(51) Int. Cl.: F04D 15/00

(54) **A DETERMINATION METHOD AND A CONTROL METHOD FOR A FLUID DISPLACEMENT DEVICE, CONTROLLER AND SYSTEM**
BESTIMMUNGSVERFAHREN UND STEUERVERFAHREN FÜR EINE FLÜSSIGKEITSVERDRÄNGUNGSVORRICHTUNG, STEUERUNG UND SYSTEM
PROCÉDÉ DE DÉTERMINATION ET PROCÉDÉ DE COMMANDE POUR UN DISPOSITIF DE DÉPLACEMENT DE FLUIDE, UNITÉ DE COMMANDE ET SYSTÈME

(30) Priority: 19.03.2012 NL 2008504; 08.05.2012 NL 2008774; 30.05.2012 US 201261653380 P
(43) Date of publication of application: 28.01.2015
(73) Proprietor: Comoco B.V., 5492 NJ Sint-Oedenrode (NL)
(72) Inventor: VELTMAN, André, 4101 BW Culemborg (NL); BEEKMANS, Robert, 5492 NJ Sint-Oedenrode (NL)
(74) Representative: Arnold & Siedsma
(86) International application number: PCT/NL2013/050193
(87) International publication number: WO 2013/141698

(56) References cited:
- US-A1- 2005 031 443
- US-A1- 2010 143 157
- None

## Description

### FIELD OF THE INVENTION

The invention relates to a method for determination of a fluid flow of a fluid displacement device.

The invention also relates to a control method for a fluid displacement device.

The invention also relates to a power and control unit for a fluid displacement device. The invention further relates to a system of such a power and control unit and a fluid displacement device, and the use thereof.

### BACKGROUND OF THE INVENTION

Ventilation devices are one example of fluid displacement devices. Other examples are for instance screws displacing water rather than air or gas. In the following, specific attention will be paid to ventilation devices, although the invention is not limited thereto. Ventilation devices are widely in use to ensure a sufficient flow of air or another gas, and/or for regulating the temperature and/or humidity within a building space. One example of a ventilation device is an air conditioning system for use in offices and private houses. However, alternative applications exist, wherein the ventilation rather than the heating or cooling is the primary task. Examples hereof include ventilation systems for use in stables, barns or laboratories, needed to ensure a minimum oxygen concentration in the air; greenhouses wherein the carbon dioxide concentration is to be controlled; storage facilities for goods including art, wherein humidity control is highly relevant.

Typically, the ventilation device comprises a fan, an axis of which is coupled to an electric motor. Generally, the fan needs to be set to a predefined gas flow. The gas is typically either air or conditioned air, i.e. with a known degree of humidity, temperature, oxygen and/or carbon dioxide concentration. The regulation of this gas flow is a known and difficult problem. The gas flow is dependent on a back pressure, which typically varies over time as a consequence of various changes, such as building topology, inlet cross-sectional area and changes in air-pressure, air-temperature and other weather conditions. Hence, there is no fixed relationship between the settings of the electric motor, for instance the speed thereof, and the gas flow. Moreover, the measurement of the gas flow by means of sensors is open to sensing errors, since the gas flow is a volumetric quantity that is not easily determined with a single sensor. Measuring the environmental conditions in the space to be treated may be an alternative, but such a sensor may be at a different location within space than the relevant objects, i.e. animals, plants, goods or human beings.

A simplistic algorithm based on the electric motor settings and a one-time calibration measurement of the gas flow and/or environmental conditions is nowadays in use, but less than optimal. Fans having an appropriate power reserve are usually used in this context, to ensure a minimum volumetric gas flow rate at different back pressure values. Such fans, in accordance with their characteristic fan curve, deliver the minimum volumetric gas flow rate at a maximum possible back pressure, and a substantially greater volumetric gas flow rate at a lower back pressure. If the volumetric gas flow rate is higher than necessary, however, a great deal of heat may be lost, and unnecessary noise occurs, since the fan is always being operated at full speed. US2008/0124226 A1 discloses such a system suitable for energy conserving installations, with a flow sensor and a detailed measurement circuit for reading out said flow sensor. However, no solution is offered for the inherent limitations of air flow sensing. Moreover, particularly in a stable, sensors are vulnerable to failure due to dust, specific gases (ammonia, methane, cleaning acids, and/or high pressure cleaning fluids), and a sensor network requires a substantial investment.

US6504338 B1 discloses a monitoring system based on a cascaded control loop to attain a constant gas flow. The outer loop of the cascade control has an input of the intended gas flow rate and an output of the rotation speed setpoint to the inner control loop. The inner control loop has an input of the rotation speed setpoint and outputs to the outer loop the control voltage setting when the rotation speed setpoint is achieved. The inner loop makes use of a look up table storage for motor/fan characteristics so as to promote efficiency of operation. The outer loop uses the measurement of the motor speed and reported control voltage at that speed to derive a proportionality constant of the system operation for that motor speed. This outer loop brings effectively adaptive control. The system relies on the assumption that there is a linear relation between fan speed and flow, for a constant system load. As long as the system load remains constant, the system would only need to monitor the motor rotational speed, which is a function of the system load, and check the motor speed and voltage control point to derive the proportionality constant.

However, the known monitoring system requires a speed sensor or tachometer to determine the fan speed and therewith the gas flow rate deemed linearly related to the fan speed.

US2005/031443 A1 and US2010/143157 A1 disclose further prior art motor control systems.It is an object of the invention to provide a sensorless system for estimating the fluid flow of a fluid displacement device, and more particularly the gas flow of a ventilation device. It is a further object of the invention to provide a method of estimating the fluid flow.

It is another object of the invention to incorporate the estimated fluid flow in a control method for the fluid displacement device. Related thereto are objects to provide an improved power and control unit, and to provide an improved system of a power and control unit and a fluid displacement device, which allow control of the operation of the fluid displacement device in a sensorless manner. Most specifically, it is an object of the invention to regulate gas flow of a ventilation device appropriately.

### SUMMARY OF THE INVENTION

In accordance with a first aspect, the invention provides a method of controlling a fluid displacement device according to claim 11.

In accordance with a further aspect, the invention provides a system comprising a power and control unit as well as a fluid displacement device according to claim 6. In accordance with a further aspect, the invention relates to a power and control unit for operation control of a fluid displacement device that is provided with an electric motor according to claim 1. In accordance with a final aspect, the invention relates to the use of this power and control unit according to claim 8.

The invention achieves an improved determination of the fluid flow via torque and rotation speed determination. It was understood by the inventors that this leads to a surprisingly good result, particularly when speed and torque are determined with sufficient accuracy. According to the invention, the torque and speed are determined by sensing voltage and current in the power and control unit, and deriving said torque and speed from said sensed voltage and current. The current and voltage sensed in a sensorless manner in accordance with one embodiment of the invention are deemed representative of current and voltage in the electric motor.

More particularly, the current and voltage are suitably sensed with an error of less than 5%, more preferably less than 2%, and most preferably at most 1%.

In the invention, use is made of characteristics of the fluid displacement device that are stored in a memory. In case of ventilation devices, such characteristics may be determined in wind tunnel experiments. Experimental results in a wind tunnel has shown that estimated motor speed needed to obtain an intended gas flow accurately corresponds to measured motor speed values, as carried out in wind tunnel experiments. This correspondence is particularly accurate at lower motor speeds, for instance up to 2500 m³/h. That is particularly relevant, as preferably a regulation algorithm is defined that operates at such lower motor speeds, so as to minimize energy consumption.

The invention is suitably implemented with a power circuit comprising a power supply providing a direct current output (dc voltage) and an inverter inverting said dc voltage into at least one driving voltage. The inverter is for instance a phase inverter or a frequency inverter, as known to the skilled person, for instance a variable-frequency drive. It appears suitable to drive the electric motor with three driving voltages that may each have its own phase and/or frequency, for which use can be made of a triac. The use of three driving voltages turns out beneficial for an accurate sensing of voltage and current. One benefit is that this topology allows a correction for EMC and EMI effects of the electric motor, particularly at small rotation speeds of the motor, i.e. such as lower than 100 rpm. However, alternative driver topologies are by no means excluded.

In order to obtain accurate sensing, a filter is suitably used so as to remove (effects of) parasitic capacitance of a power cable between the inverter and the electric motor. Such filter is suitably a first order passive filter. The filter is suitably shunted with a differential amplifier. Most suitably, a separate filter is implemented for each driving voltage.

The sensing of current and voltage is furthermore improved in that the controller is provided with a reference ground in the form of a floating point ground. In other words, the reference ground of the controller is identical to that of the inverter, therewith preventing any errors on the basis of a difference in grounding. Alternatively, the inverter could be provided with a reference ground of the controller. However, dueto the high voltages in the inverter, this appears less optimal.

In a further step, the values for the operation parameters of the electric motor are averaged over time. Suitably the time based overage is taken over a suitable period. This is particularly relevant in case of using an asynchronous electric motor, such as an induction motor, in view of their slip and any tolerances in the effective speed as a consequence thereof.

According to the invention, heat dissipation means are present. This smoothens and stabilizes operation of the power and control unit, since significant amounts of energy are dissipated in the inverter. Such stabilized heat flow is generally suitable so as to allow for relatively long operation times. As such, it is not merely useful in the context of driving a fluid displacement device, but also to ensure that the control algorithm of the present invention may be carried out in stabilized manner. Such heat dissipation means are embodied as a heat sink for the inverter.

The advantage of using a heat sink is that it is passive. There is therefore no need that air flows into the power and control unit for cooling purposes. This passive cooling, based on a heatsink, therewith enables, according to the invention, a hermetic enclosure of the power and control unit.

Such a hermetic enclosure is particularly relevant for use in barns and stables and other environments where dust and aggressive vapour may be present.

The provision of a hermetic enclosure that protects the electronics against the agricultural environment is particularly suitable, in that it allows reduction of the length of the power cable between the phase inverter and the electric motor. The power and control unit can now be present within the stable and near to the ventilation device rather than at a remote location. It will be clear that the reduction of the length of the power cable in itself is beneficial for reduction of parasitic capacitance and more generally for an accurate determination of the torque and rotation speed of the electric motor. The determination method of the fluid flow is preferably carried out repeatedly, i.e. in a recurring algorithm. Such repeated determination allows taking into account the fluid flow as determined before in order to derive the subsequent fluid flow. It will be understood that thereto the determined fluid flow is stored in a memory. A series of fluid flow in a course of time, and/or changes of the fluid flow over time may be stored as well, as will be apparent to the skilled person.

Preferably, the determination step includes a step of deriving a flow regime. Such derivation is deemed beneficial for situation wherein the mechanical load of the fluid displacement device is high. In such a situation, there more than one value of the fluid flow may exist for a single combination of a torque and a rotation speed.

Particularly, the values may represent a normal operation and a stalled operation. A flow regime derivation, e.g. of normal operation regime or stalled operation regime, allows to specify the correct fluid flow. The flow regime derivation may be carried out on the basis of temperature determination of the electric motor, since motor cooling is rather poor in stalled operation regime, and the temperature will thus rise. The flow regime derivation may alternatively be carried out on the basis of a hydraulic load, which is defined as a ratio of pressure and flow. Typically the hydraulic load-pressure has a quadratic dependence on the fluid flow. P_{load} = K. flow². This hydraulic load is much larger during stalled operation than during normal operation. As a consequence of said load, reaction times are different in the said flow regimes. The difference is easily a factor 10, which can be readily determined. As a consequence, the equilibrium after a change in rotation speed is found much faster than during normal operation. Further methods for flow regime derivation are by no means excluded.

For such determination of the hydraulic resistance, a dynamic measurement suitably occurs. In such dynamic measurement, particularly the rotation speed is varied around a setpoint.

A ventilation device is a most important and primary example of the fluid displacement device in accordance with the invention. Herein, the fluid flow is the gas flow. Control of gas flow is typically the preferred application and desired control mechanism for a ventilation device. Alternatively, the pressure and/or rotation speed may be controlled. The control suitably occurs directly, in that the determined fluid flow is used as an input for defining one or more control signals. The control signals are in one suitable embodiment frequency control signals so as to set the rotation speed of the electric motor. It is not excluded, however, that the control of the ventilation device is specified in a system controller rather than in the controller of the power and control unit. The use of a system controller is particularly relevant in case that more than a single ventilation device is present.

### BRIEF INTRODUCTION OF THE FIGURES

These and other aspects of the invention will now be further elucidated with reference to the Figures, that are diagrammatical in nature and intended for illustrative purposes only, in which:
Fig. 1 shows a schematic diagram of the power and control unit with the ventillation device of the invention;
Fig. 2 and 3 show experimental measurements of gas flow and torque carried out with a ventilation device in a wind tunnel;
Fig. 4 show a graph in which the torque is set out as a function of the rotation speed in the invention;
Fig. 5 shows a graph in which the gas flow is set out as a function of torque, as well as rotation speed;
Fig. 6 shows a graph in which the gas flow is set out as a function of the rotation speed, both for measured gas flow Qₘ as for the estimated gas flow Qₑ;
Fig. 7 shows parametrisation curves based on wind tunnel measurements for one rotation speed, and
Fig. 8 shows a graph in which the shaft pressure Pₛₕ is set out as a function of the gas flow Q.

### DETAILED DISCUSSION OF ILLUSTRATIVE EMBODIMENTS

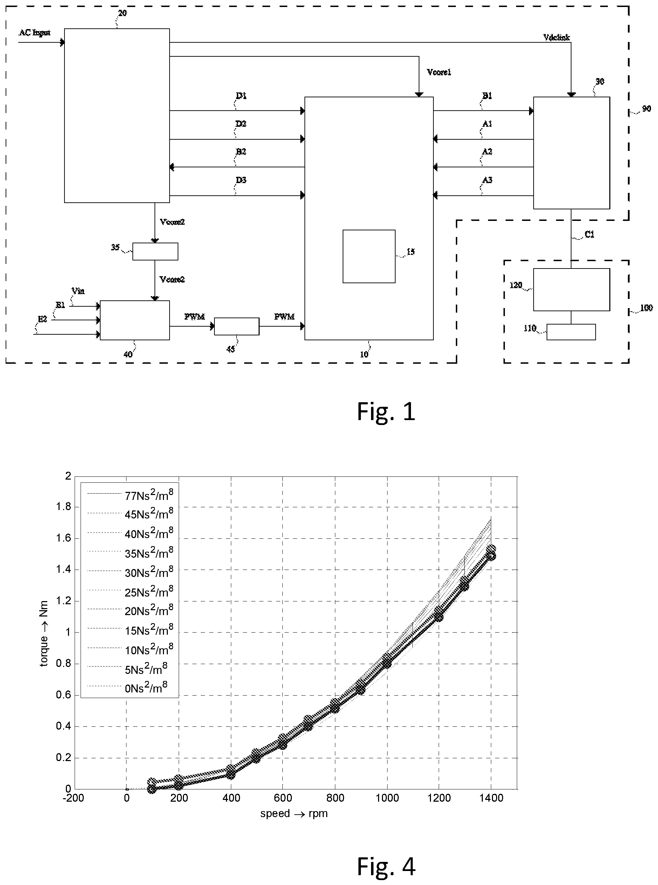

Fig. 1 shows a schematic diagram of the system of the invention comprising a fluid displacement device, in this example a ventilation device 100, and a power and control unit 90. The ventilation device 100 comprises an electric motor 120, such as an induction motor and a fan 110. The power and control unit 90 comprises a power circuit, which comprises a power supply 20 and a phase inverter 30. The phase inverter 30 of the present embodiment is particularly a voltage source inverter (VSI). A current source inverter could be used alternatively, although less preferable. The voltage source inverter comprises one or more capacitors as a DC interstage circuit buffer. The power supply 20 converts the AC input into a DC voltage (*Vdclink*) that is transmitted to the phase inverter 30. The power supply 20 moreover serves the other active components 10, 40 within the power and supply unit 90 with a supply voltage (*Vcorel* and *Vcore2*)*.* The active component 10 is a controller which controls the drive voltage C1 that is supplied to the electric motor 120 of the ventilation device 100. The active component 40 is an input conversion controller. This active component 40 is present between isolations 35, 45, that serve to protect the low voltage component 40 against high voltages present in the power supply 20 and the controller 10. The use of a phase inverter 30 providing three driving voltages is known per se to the skilled person in the context of driving electric motors. It will further be understood that the skilled person may envisage alternative driving topologies, which are not excluded from the invention.

The input conversion controller 40 suitably is provided with an input voltage Vᵢₙ for instance in the range of 0-10V. Furthermore it is provided with inputs E1, D2 for input inverse and calibration signals. Driven by the voltage *Vcore2* the input conversion controller 40 may inverse the input where requested so as to provide this input in appropriate from, as PWM modulated signals to the controller 10. It will be understood that such input signals could alternatively be provided directly to the controller 10.

The power supply 20 suitably provides sensing signals D1 and D2 to the controller 10, so as to enable appropriate control. These signals D1, D2 suitably indicate or represent the AC input voltage and the Vdclink-voltage. One or more sensing signals D3 represent current values. In return, the controller 10 provides one or more control signals B2 to the power supply 20. This output B2 is suitably in the form of PWM signals. More preferably, the power supply comprises a switched mode power supply in combination with a power factor correction (PFC) unit, for instance with two stages, and more preferably as an interleaved PFC. The signal B2 then suitably controls the effective power factor correction.

The phase inverter 30 is controlled by means of one or more control signals B1 from the controller. Suitably, pulse width modulation (PWM) is used for provision of these control signals B1 and is known per se for controlling electric motors used for various fields of application and having small to medium and larger power levels of up to few kW. The control signals are particularly addressed to controllable switches within the phase inverter 30 that are responsible for a DC/AC conversion by turning off and on. For instance, these switches are IGBT- or GTO-type semiconductor switches that are suitable for the effective voltage of the *Vdclink.* Consequently, the phase inverter 30 converts a direct current voltage (DC) into an alternating current voltage (AC) having an adjustable amplitude and frequency (or phase). The turning off and on of the switches, in combination with the PWM control signal effectively results in the provision of a sinusoidal profile into the DC voltage. Thereto, as known in the art, two control signals, one for the positive side and one for the negative side are addressed to corresponding switches that together define one driving voltage with one phase and/or frequency. Rather than as separate driving voltages, this output could be described as a multiphase driving voltage D1.

A problem that is encountered in the case of pulse width modulation by means of DC/AC phase inverters is that the phase inverter must generate relatively narrow pulses in order to deliver driving voltages having comparatively large amplitude. Due to the inherent dead time, i.e. the time required for extinguishing or turning off the switches so as to prevent short-circuit paths via the switches, and to tolerances, parasitical capacitances and inductances and other inaccuracies in the switches and the connecting wiriing thereof, the pulse width that can be realised is in practice limited to a certain minimum. Semiconductor switches, such as field-effect transistors, will furthermore undergo inadmissible heating up in that case, because relatively much power is dissipated in the transistors, which not only means a loss of efficiency but also makes the motor control less accurate.

In the event that the electric motor is an asynchronous motor, such as an induction motor, the switches in the phase inverter will be operated with an asynchronous frequency, i.e. without a fixed switching frequency. Thereto, hysteresis is to be controlled. By means of a first order low-pass filter, such as an RC or RL low-pass filter having a cutoff frequency that is related to the turnover frequency of the motor, the problems associated with narrow pulses will be avoided.

In accordance with the invention, current and voltage are sensed in the power circuit. This current and voltage are representative of the current and voltage in the electric motor. The sensed signals A1, A2 end up in the controller. Advantageously, the current and voltage is sensed in the phase inverter 30. Most suitably, the current and voltage are sensed per driving voltage/phase and particularly for each of the phases. As a result, in case of a three-phase motor, such as a 3 phase induction motor, the number of current signals A1 to the controller 10 is 3 and the number of voltage signals A2 to the controller 10 is three. In addition, protective control signals A3 are transmitted from the phase inverter 30 to the controller. These protective control signals typically indicate temperature and/or error and may be intended as overshoot signals in case of serious errors. It will be understood by the skilled person that the intention of the current and voltage sensing in the power circuit is to obtain values on the basis of which torque and rotation speed of the electric motor can be derived. Any sensing in a sensorless manner providing such result is suitable.

On the basis of said current and voltages, the controller 10 is able to reproduce values for the torque of the electric motor 120. Reference is made to US5,231,339, this patent shows in detail various diagram how to determine the torque in an induction motor and how to use the determined torque as a feedback so as to arrive at a constant torque. Specifically, said known power and control unit comprises a phase inverter (also known as variable-voltage variable-frequency inverter), a voltage control system, a slip frequency control system as well as means for making a change-over between said voltage control system and said slip frequency control system when the rotation frequency of said induction motor takes a predetermined value. As for instance shown in relation to Fig. 16, a determination of the voltage may be used to replace a temperature sensor and operates via the power correction factor unit to arrive at the desired inverter frequency. Even though this Fig. 16 teaches the determination of the motor speed by means of sensors, so as to define areference voltage, it will be understood by the skilled person that such rotation speed could also be derived directly from the driving voltages of the various phases, when operation characteristics of the induction motor have been stored in a memory of the controller in advance. The determination of torque may further be implemented in controller integrated circuits, such as the 32bit microcontroller integrated circuit C2000™ as commercially available from Texas Instruments. This microcontroller is provided with a dual sample and hold feature, such that voltage and current measurements can be captured at the same time and be converted into the digital domain using ADCs. It is thereafter possible to combine the data with reference data from an internal memory and apply any control algorithms as necessary.

In accordance with the invention, the fluid flow is estimated on the basis of the torque and rotation speed in an estimator 15. This estimator is suitably implemented in software within the controller 10, and thereto is able to make use of any stored data in the controller 10, such as characteristics of the ventilation device 100, as well as time-averaged values for the torque and the rotation speed.

The inventors of the present invention have found that surprisingly, the fluid flow may be estimated sensorless, i.e. without any realtime measurement of the gas flow or related units (such as shaft pressure) of the ventilation device 100. However, the same estimator may be used, in case sensors would be present for determination of any of the current, voltage, torque and rotation speed. This will be explained in the following, starting with some general introduction. Ventilation devices can be thought of as low pressure air pumps that utilize power from a motor to output a volumetric flow of air at a given pressure. A propeller converts torque from the motor to increase static pressure across the fan rotor and to increase the kinetic energy of the air particles. The motors are typically permanent split capacitor AC induction motors or brushless DC motors. Ventilation devices may be fans and blowers. The main difference between fans and blowers is in their flow and pressure characteristics. Fans deliver air in an overall direction that is parallel to the fan blade axis and can be designed to deliver a high flow rate, but tend to work against low pressure. Blowers tend to deliver air in a direction that is perpendicular to the blower axis at a relatively low flow rate, but against high pressure.

Typically, the greatest airflow delivery from a fan occurs when inflowing air enters with a minimum attack angle, but the pressure differential across the fan is zero. As the attack angle is increased, the airflow delivery decreases and the pressure differential increases. The airflow can decrease to nearly zero, but will also deliver the maximum pressure differential in this condition, which is called the shut-off point. When an attack angle is reached, where the air will no longer flow smoothly and begins to separate from the blades of the fan, an "aerodynamic stall" condition exists. A stalled fan continues to deliver air, but at an increased static pressure and a decreased volumetric flow rate, and also at the cost of an increase in noise.

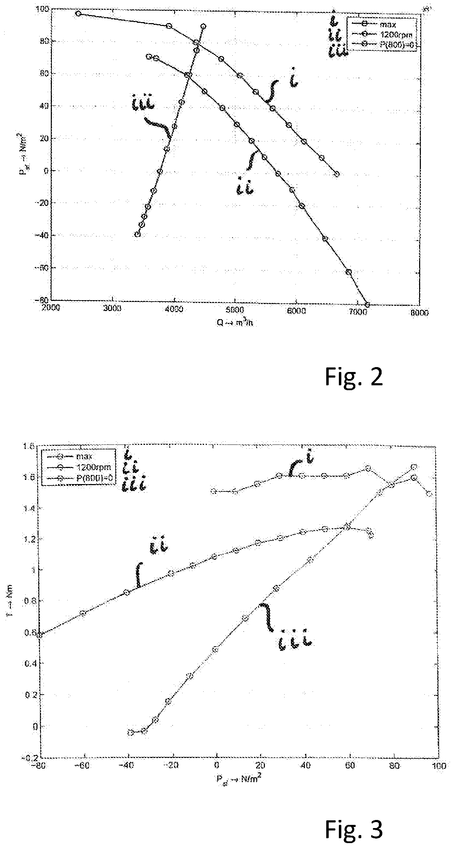

Fig. 2 and 3 show experimental results carried out in a wind tunnel. A 4D45-280W fan 110 was driven by a three phase Δ connected 230V induction motor. The motor was driven by a power and control unit as shown in Fig. 1. Gas flow, in this case air flow, and pressure were recorded under various conditions. Three sets of measurements were carried out:
In a first experiment, a full-power condition was tested, indicated in Fig. 2 and 3 in graph i. Herein the motor was operated at maximum power, while a speed controllable pump in the wind tunnel changed the pressure across the tested 4D45 fan. Pressure, flow, speed and torque were recorded. The pressure and flow were measured with sensors, speed and torque were determined in the controller 10.

In a second experiment, the fan speed was controlled to 1200 rpm, as determined with the controller 10. The results of this experiment are indicated in Fig. 2 and 3 as graph ii.

In a third experiment, the fan speed was initialized at 800 rpm, while the pump speed was tuned to yield zero differential fan pressure. The pump setting was kept constant, whereas the rotation speed of the 4D45 fan was changed from 300 rpm up to 1400 rpm in 100 rpm steps. The results of this third experiment are shown in Fig. 2 and 3 as graph iii.

Fig. 2 shows the measured pressure on the shaft, Pₛₕ (N/m²) as a function of the gas flow (m³/h). The measurements indicate that the pressure on the shaft decreases with an increase in air flow, both for a fixed rotation speed and for maximum power. Under a situation of zero differential fan pressure, the pressure increases with the air flow.

Fig. 3 shows the torque as determined in the controller 10, as a function of the pressure of the shaft. For the maximum power, the torque is constant, independent of the pressure, which is as expected. For the rotation speed of 1200 rpm, the torque increases with pressure. However, the torque increase gradually flattens off. A substantially linear increase of the torque with the shaft pressure is achieved for conditions of zero differential fan pressure.

In combination, Fig. 2 and 3 make apparent that there is a relationship between torque and gas flow, when the rotation speed is known. This relationship may be separately registered and stored in a memory as reference result relating to a specific type of ventilation device. This relationship can be further expressed and used for reference in that coefficients of the curves of hydraulic pressure as a function of gas flow and torque as a function of the gas flow are derived. The coefficients are suitably derived assuming a 2^{nd} order graph (i.e. *Tₒ(Q) ≈ b₂Q²* + *b₁Q* + *bₒ; H(Q) ≈ a₂Q²* + *a₁Q* + *aₒ).*

Fig. 4 shows a graph of the torque as a function of the rotation speed for various hydraulic loads. This graph shows that the torque is related to the rotation speed in a quadratic relationship. The steepness of the quadratic curve is related to the hydraulic load. Clearly, torque increases with an increase of hydraulic load. In other words, after determining torque and speed of the electric motor, the fluid flow - gas flow in the case of a ventilation device - may be derived. However the graphs for the various hydraulic loads are not far apart, such that measurement accuracy needs to be high to estimate the gas flow appropriately.

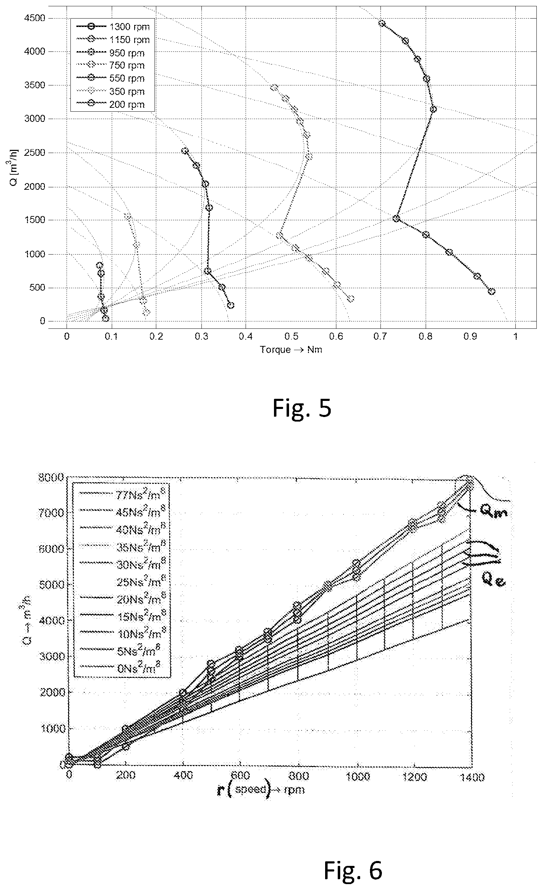

Fig.5 then combines the data resulting from the measurements with the determined hydraulic loads as shown in Fig. 4. The graph indicates gas flow Q as a function of torque T for various rotation speeds. Shown are rotation speeds of 200 rpm, 300 rpm, 550 rpm, 750 rpm and 950 rpm, all of which were based on experimental data at 950 rpm. Dotted lines are added to the determined data, so as to indicate possible parametrisation. More precisely, it is apparent that two dotted parabolic lines are present for each data set. It is apparent from this Figure 5, that two different flow regimes can be distinguished: the normal operation and the stalled operation. Thus, the gas flow may be found if the actual flow regime is determined, or if the normal operation regime may be assumed to occur.

On the basis of this graph, or corresponding algorithms, the gas flow is estimated on the basis of the torque T and the rotation speed n. Fig. 6 shows the relationship between the rotation speed n and the gas flow, for a measured gas flow Qₘ and an estimated gas flow Qₑ. The measured curves Qₘ and estimated curve Qₑ nicely correspond, particularly for any rotation speed up to approximately 500 rpm. Correspondence for higher rotation speeds may be improved by improved derivation of the coefficients from the measured curves.

It follows from this graph that the air flow may be set on the basis of the rotation speed. This rotation speed however directly depends on the frequency control data sent from the controller 10 to the phase inverter 30. Hence, an optimum result of gas flow may be achieved in a sensorless manner in accordance with the invention.

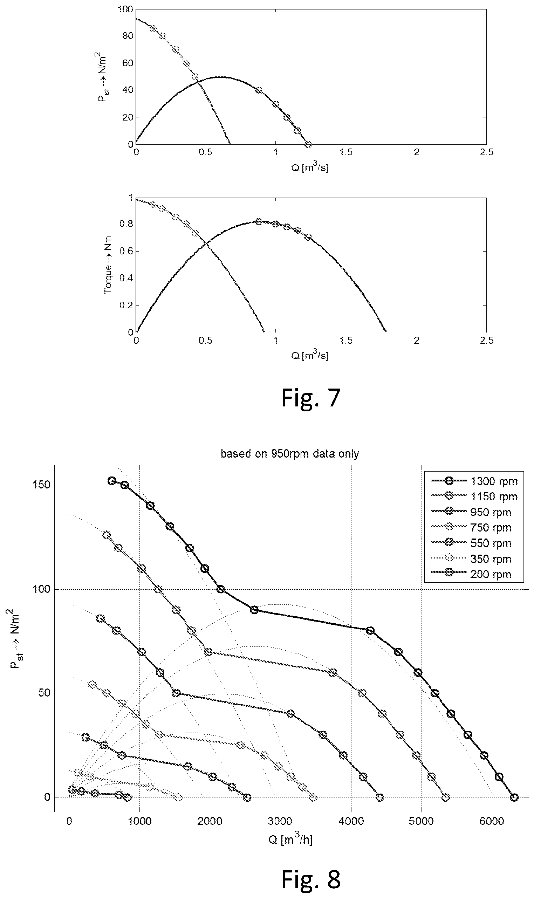

Fig. 7 shows the curve parametrisation indicated in Fig. 5. The curves indicate the pressure P_{sf} and the torque T as a function of the gas flow Q. Shown are experimental data determined at a rotation speed of 950 rpm. Clearly, each curve parametrisation is based on two separate parabolic descriptions of pressure and torque. The first curve has its maximum torque and pressure at a zero flow. Zero torque and zero pressure are found at flow values below 1 m³/s (i.e. 3600 m³/h). This curve describes the stalled operation regime. The second curve starts at zero flow with zero pressure and zero torque and thereafter runs to a maximum. This second curve corresponds to normal operation.

Fig. 8 shows a graph of the shaft pressure Pₛₕ as a function of the gas flow Q for a set of different rotation speeds, and again indicating the dotted lines of the parametrisation. It is first of all apparent that there is an excellent matching between the data for different rotation speeds, and the parametrisation curves, for both normal operation and stalled operation. A minor deviation is observed at a rotation speed of 1300 rpm, which is however all but problematic.

In order to find whether normal operation or stalled operation applies, it can be deduced from this Figure 8 that the rotation speed may be varied. The change in shaft pressure and gas flow significantly differs from both operation regimes. It turns out that also the changes take place at different speeds: in the stalled operation, a new equilibrium is more quickly found than in the normal operation.

In summary, the fluid flow of a fluid displacement device (100) provided with an electric motor (120) may be set on the basis of a power and control unit (90). Thereto, a power circuit generally comprising an inverter (30), such as a frequency inverter, drives the electric motor (110), particularly with a driving voltage (D1). Voltage and current (A1, A2) in the electric motor (110) are sensed sensorless. Torque and rotation speed of the electric motor (110) are derived from said sensed voltage and current (A1, A2). A fluid flow of the fluid displacement device (110) is estimated in an estimator (15) based on said torque and rotation speed of the electric motor (120) and at least some fluid displacement device characteristics stored in a memory. An operation speed of the electric motor (120) based on said estimated fluid flow is defined and may be transmitted to the inverter (30).

## Claims

1. A power and control unit for operation control of a fluid displacement device that is provided with an electric motor, said power and control unit comprising:
- a power circuit for driving the electric motor, wherein the power circuit comprises a power supply unit providing a direct current output (dc voltage) and an inverter inverting said dc voltage into at least one driving voltage, wherein the at least one driving voltage is defined by said at least one control signal to the inverter;
- means for determining torque and rotation speed of the electric motor;
- a memory for storage of characteristics of the fluid displacement device;
- an estimator for estimating a fluid flow of the fluid displacement device based on said torque and rotation speed of the electric motor and at least one characteristic of the fluid displacement device, and
- processor means for defining at least one control signal to said power circuit based on said determined fluid flow, therewith controlling operation of the fluid displacement device,
wherein said means for determining torque and rotation speed comprise:
- means for sensing a voltage and a current in said power and control unit, and
- a processor for deriving said torque and rotation speed from said sensed voltage and current,
**characterised in that** said means for sensing the voltage and current are integrated into the power supply unit of the inverter, said phase inverter is provided with a heat sink; and said power and control unit is provided with a hermetic, ammonia-resistant enclosure.

2. The power and control unit as claimed in claim 1, wherein the control signals are transmitted to the inverter as pulse width modulated (PWM) signals.

3. The power and control unit as claimed in claim 1, wherein the inverter is configured to drive the electric motor with three driving voltages and comprises a triac.

4. The power and control unit as claimed in any of the preceding claims, wherein at least one filter is present for filtering out effects of parasitic capacitance of a power cable to the electric motor, wherein a separate filter is implemented for each driving voltage.

5. The power and control unit as claimed in claim 4, wherein the filter is a first order passive filter shunted with a differential amplifier.

6. A system of a fluid displacement device comprising an electric motor, and a power and control unit as claimed in any of the claims 1-5 for driving said electric motor of said fluid displacement device, said fluid displacement device having device characteristics and further having in operation a fluid flow.

7. The system as claimed in claim 6, wherein a power cable connects the power circuit to the electric motor, which power cable has a length of at most 2 meters.

8. Use of the power and control unit of any of the claims 1 to 5 for operation control of a fluid displacement device coupled thereto, wherein the fluid displacement device is a ventilation device, and its fluid flow is a gas flow.

9. Use as claimed in claim 8 or use of the system as claimed in any of the claims 6-7, for control in agricultural environments, such as greenhouses and stables.

10. Use as claimed in claim 8, wherein the gas flow of the ventilation device is controlled for setting the oxygen supply and/or for controlling the temperature in a limited space.

11. A method of controlling a fluid displacement device provided with an electric motor that is driven from a power and control unit as claimed in any of the claims 1-2, comprising the steps of:
- determining a fluid flow of the fluid displacement device, in that torque and rotation speed of the electric motor are determined, and the fluid flow is estimated based on said torque and rotation speed of the electric motor and at least one characteristic of the fluid displacement device stored in a memory;
- driving the electric motor based on said determined fluid flow, therewith controlling operation of the fluid displacement device,
wherein the torque and rotation speed are determined by sensing a voltage and current in said power and control unit, and deriving the torque and speed of the electric motor from said sensed voltage and current.

12. The method as claimed in claim 11, wherein the electric motor is driven with a plurality of driving voltages.

13. The method as claimed in any of the preceding claims 11-12, wherein the sensing of the current and voltage comprises a filtering step for filtering out effects of parasitic capacitance of a power cable to the electric motor.

14. The method as claimed in any of the claims 11-13, further comprising the steps of deriving a flow regime in the fluid displacement device, and specifying the fluid flow corresponding with the determined flow regime.

## Patentansprüche

1. Leistungs- und Steuerungseinheit für die Betriebssteuerung einer
Fluidverdrängungsvorrichtung, die mit einem Elektromotor versehen ist, wobei die Leistungsund Steuerungseinheit aufweist:
- eine Leistungsschaltung zum Antreiben des Elektromotors, wobei die Leistungsschaltung eine Leistungsversorgungseinheit, die einen Gleichstromausgang (Gleichspannung) bereitstellt, und einen Inverter, der die Gleichspannung in wenigstens eine Antriebsspannung invertiert, aufweist, wobei die wenigstens eine Antriebsspannung durch wenigstens ein Steuersignal an den Inverter definiert ist;
- Einrichtungen zur Bestimmung eines Drehmoments und einer Drehzahl des Elektromotors;
- einen Speicher zum Speichern von Charakteristiken der Fluidverdrängungsvorrichtung;
- eine Schätzeinrichtung zum Schätzen einer Fluidströmung der Fluidverdrängungsvorrichtung basierend auf dem Drehmoment und der Drehzahl des Elektromotors und wenigstens einer Charakteristik der Fluidverdrängungsvorrichtung, und
- Prozessoreinrichtungen zum Definieren wenigstens eines Steuersignals an die Leistungsschaltung basierend auf der bestimmten Fluidströmung, womit der Betrieb der Fluidverdrängungsvorrichtung gesteuert wird,
wobei die Einrichtungen zur Bestimmung des Drehmoments und der Drehzahl aufweisen:
- Einrichtungen zum Abtasten einer Spannung und eines Stroms in der Leistungs- und Steuerungseinheit, und
- einen Prozessor zum Ableiten des Drehmoments und der Drehzahl aus der abgetasteten Spannung und dem Strom,
**dadurch gekennzeichnet, dass**
die Einrichtungen zum Abtasten der Spannung und des Stroms in die Leistungsversorgungseinheit des Inverters integriert sind,
wobei der Phaseninverter mit einer Wärmesenke versehen ist;
und wobei die Leistungs- und Steuerungseinheit mit einem hermetischen ammoniakresistenten Gehäuse versehen ist.

2. Leistungs- und Steuerungseinheit nach Anspruch 1, wobei die Steuersignale als impulsbreitenmodulierte (PWM-) Signale an den Inverter übertragen werden.

3. Leistungs- und Steuerungseinheit nach Anspruch 1, wobei der Inverter konfiguriert ist, um den Elektromotor mit drei Antriebsspannungen anzutreiben, und einen Triac aufweist.

4. Leistungs- und Steuerungseinheit nach einem der vorhergehenden Ansprüche, wobei wenigstens ein Filter zum Herausfiltern von Wirkungen der Parasitärkapazität eines Stromkabels auf den Elektromotor vorhanden ist, wobei für jede Antriebsspannung ein getrenntes Filter implementiert ist.

5. Leistungs- und Steuerungseinheit nach Anspruch 4, wobei das Filter ein passives Filter erster Ordnung ist, das zu einem Differenzverstärker parallelgeschaltet ist.

6. System einer Fluidverdrängungsvorrichtung, das einen Elektromotor und eine Leistungs- und Steuerungseinheit nach einem der Ansprüche 1-5 aufweist, um den Elektromotor der Fluidverdrängungsvorrichtung anzutreiben, wobei die Fluidverdrängungsvorrichtung Vorrichtungscharakteristiken hat und ferner im Betrieb eine Fluidströmung hat.

7. System nach Anspruch 6,
wobei ein Stromkabel die Leistungsschaltung mit dem Elektromotor verbindet, wobei das Stromkabel eine Länge von höchstens 2 Metern hat.

8. Verwendung der Leistungs- und Steuerungseinheit nach einem der Ansprüche 1 bis 5 für die Betriebssteuerung einer damit gekoppelten Fluidverdrängungsvorrichtung, wobei die Fluidverdrängungsvorrichtung eine Lüftungsvorrichtung ist und ihre Fluidströmung eine Gasströmung ist.

9. Verwendung nach Anspruch 8 oder Verwendung des Systems nach einem der Ansprüche 6-7 für die Steuerung in agrarwirtschaftlichen Umgebungen, wie etwa Gewächshäusern und Ställen.

10. Verwendung nach Anspruch 8, wobei die Gasströmung der Lüftungsvorrichtung gesteuert wird, um die Sauerstoffzufuhr festzulegen und/oder die Temperatur eines begrenzten Raums zu steuern.

11. Verfahren zur Steuerung einer Fluidverdrängungsvorrichtung, die mit einem Elektromotor versehen ist, der von einer Leistungs- und Steuerungseinheit nach einem der Ansprüche 1-2 angetrieben wird, das die folgenden Schritte aufweist:
- Bestimmen einer Fluidströmung der Fluidverdrängungsvorrichtung, indem das Drehmoment und die Drehzahl des Elektromotors bestimmt werden und die Fluidströmung basierend auf dem Drehmoment und der Drehzahl des Elektromotors und wenigstens einer in einem Speicher gespeicherten Charakteristik der Fluidverdrängungsvorrichtung geschätzt wird;
- Antreiben des Elektromotors basierend auf der bestimmten Fluidströmung, womit der Betrieb der Fluidverdrängungsvorrichtung gesteuert wird,
wobei das Drehmoment und die Drehzahl bestimmt werden, indem eine Spannung und ein Strom in der Leistungs- und Steuerungseinheit abgetastet werden und das Drehmoment und die Drehzahl des Elektromotors aus der abgetasteten Spannung und dem Strom abgeleitet werden.

12. Verfahren nach Anspruch 11, wobei der Elektromotor mit mehreren Antriebsspannungen angetrieben wird.

13. Verfahren nach einem der vorhergehenden Ansprüche 11 - 12, wobei das Abtasten des Stroms und der Spannung einen Filterschritt zum Herausfiltern von Wirkungen der Parasitärkapazität eines Stromkabels auf den Elektromotor aufweist.

14. Verfahren nach einem der Ansprüche 11 - 13, das ferner die Schritte zum Ableiten eines Strömungsregimes in der Fluidverdrängungsvorrichtung und Spezifizieren der Fluidströmung, die dem bestimmten Strömungsregime entspricht, aufweist.

## Revendications

1. Unité d'alimentation et de commande destinée à assurer la commande de fonctionnement d'un dispositif de déplacement de fluide qui comporte un moteur électrique, ladite unité d'alimentation et de commande comprenant :
un circuit d'alimentation destiné à entraîner le moteur électrique, dans laquelle le circuit d'alimentation comprend une unité d'alimentation en énergie délivrant une sortie en courant continu (tension continue) et un onduleur transformant ladite tension continue en au moins une tension d'attaque, dans laquelle la au moins une tension d'attaque est définie par ledit au moins un signal de commande sur l'onduleur ;
des moyens destinés à déterminer un couple et une vitesse de rotation du moteur électrique ;
une mémoire destinée à mémoriser les caractéristiques du dispositif de déplacement de fluide ;
un élément d'estimation destiné à estimer un débit de fluide du dispositif de déplacement de fluide sur la base desdits couple et vitesse de rotation du moteur électrique et d'au moins une caractéristique du dispositif de déplacement de fluide, et
des moyens de traitement destinés à définir au moins un signal de commande vers ledit circuit d'alimentation sur la base dudit débit de fluide prédéterminé, commandant ainsi le fonctionnement du dispositif de déplacement de fluide,
dans laquelle lesdits moyens de détermination de couple et de vitesse de rotation comprennent :
des moyens destinés à détecter une tension et un courant sur ladite unité d'alimentation et de commande, et
une unité de traitement destinée déduire lesdits couple et vitesse de rotation à partir desdites tension et courant détectés,
**caractérisée en ce que**
lesdits moyens de détection des tension et courant sont intégrés à l'unité d'alimentation en énergie de l'onduleur,
ledit onduleur comporte un dissipateur thermique ;
et ladite unité d'alimentation et de commande comporte une enceinte hermétique résistant à l'ammoniaque.

2. Unité d'alimentation et de commande selon la revendication 1, dans laquelle les signaux de commande sont transmis à l'onduleur sous forme de signaux à modulation de largeur d'impulsion (PWM).

3. Unité d'alimentation et de commande selon la revendication 1, dans laquelle l'onduleur est configuré de manière à attaquer le moteur électrique avec trois tensions d'attaque et comprend un triac.

4. Unité d'alimentation et de commande selon l'une quelconque des revendications précédentes, dans laquelle au moins un filtre est présent afin de filtrer des effets de la capacitance parasite d'un câble d'alimentation sur le moteur électrique, dans laquelle un filtre de séparation est mis en œuvre pour chaque tension d'attaque.

5. Unité d'alimentation et de commande selon la revendication 4, dans laquelle le filtre est un filtre passif du premier ordre en court-circuit avec un amplificateur différentiel.

6. Ensemble d'un dispositif de déplacement de fluide comprenant un moteur électrique et une unité d'alimentation et de commande selon l'une quelconque des revendications 1 à 5 afin d'attaquer ledit moteur électrique et ledit dispositif de déplacement de fluide, ledit dispositif de déplacement de fluide présentant des caractéristiques de dispositif et assurant, en outre, en fonctionnement un débit de fluide.

7. Ensemble selon la revendication 6, dans laquelle un câble d'alimentation raccorde le circuit d'alimentation au moteur électrique, lequel câble d'alimentation présente une longueur d'au moins 2 mètres.

8. Utilisation de l'unité de puissance et de commande selon l'une quelconque des revendications 1 à 5 afin d'assurer la commande de fonctionnement d'un dispositif de déplacement de fluide couplé à celui-ci, dans laquelle le dispositif de déplacement de fluide est un dispositif de ventilation et son débit de fluide est un débit de gaz.

9. Utilisation selon la revendication 8 ou utilisation de l'ensemble selon l'une quelconque des revendications 6 et 7, afin d'assurer une commande dans des environnements agricoles, tels que des serres et étables.

10. Utilisation selon la revendication 8, dans laquelle le débit de gaz du dispositif de ventilation est commandé afin de régler l'alimentation en oxygène et/ou afin de commander la température dans un espace limité.

11. Procédé de commande d'un dispositif de déplacement de fluide comportant un moteur électrique qui est entraîné à partir d'une unité d'alimentation et de commande selon l'une quelconque des revendications 1 et 2, comprenant les étapes de :
détermination d'un débit de fluide du dispositif de déplacement de fluide, dans laquelle le couple et la vitesse de rotation du moteur électrique sont déterminés, et le débit de fluide est estimé sur la base desdits couple et vitesse de rotation du moteur électrique et au moins une caractéristique du dispositif de déplacement de fluide est mémorisée dans une mémoire ;
attaque du moteur électrique sur la base dudit débit de fluide déterminé, commandant ainsi le fonctionnement du dispositif de déplacement de fluide,
dans lequel les couple et vitesse de rotation sont déterminés en détectant une tension et un courant dans ladite unité d'alimentation et de commande, et en déduisant les couple et vitesse du moteur électrique à partir desdits courant et tension détectés.

12. Procédé selon la revendication 11, dans lequel le moteur électrique est attaqué par une pluralité de tensions d'attaque.

13. Procédé selon l'une quelconque des revendications précédentes 11 et 12, dans lequel la détection des courant et tension comprend une étape de filtrage destinée à filtrer des effets de la capacitance parasite d'un câble d'alimentation sur le moteur électrique.

14. Procédé selon l'une quelconque des revendications 11 à 13, comprenant, en outre, les étapes de déduction d'un régime d'écoulement sur le dispositif de déplacement de fluide et la spécification du débit de fluide correspondant au régime d'écoulement déterminé.
